# EUROPÄISCHE PATENTSCHRIFT

(11) **EP 2 905 130 B1**
(45) Veröffentlichungstag und Bekanntmachung des Hinweises auf die Patenterteilung: **27.07.2016**
(21) Anmeldenummer: 15153159.7
(22) Anmeldetag: 30.01.2015
(51) Int. Cl.: B32B 17/10, B32B 27/06, B32B 27/18, B32B 27/22

(54) **Verfahren zur Herstellung von Verbundglaslaminaten aus einem Schichtkörper enthaltend eine weichmacherhaltige und eine weichmacherarme Polyvinylacetalfolie**
Method for the preparation of composite glass laminates from a coating body containing a plasticised and a low plasticiser content polyvinyl acetal film
Procédé de fabrication de laminés de verre feuilleté à partir d'un stratifié contenant une feuille de polyvinylacétal avec du plastifiant et une feuille de polyvinylacétal sans plastifiant

(30) Priorität: 05.02.2014 EP 14154012
(43) Veröffentlichungstag der Anmeldung: 12.08.2015
(73) Patentinhaber: Kuraray Europe GmbH, 65795 Hattersheim (DE)
(72) Erfinder: Keller, Uwe, D-53177 Bonn (DE); Greb, Marco, 63589 Linsengericht (DE)
(74) Vertreter: Kisters, Michael Marcus

(56) Entgegenhaltungen:
- EP-A1- 2 679 558
- WO-A1-2004/063232

## Beschreibung

Verfahren zur Herstellung von Verbundglaslaminaten aus einem Schichtkörper enthaltend eine weichmacherhaltige und eine weichmacherarme Polyvinylacetalfolie

### Technisches Gebiet

Die vorliegende Erfindung betrifft ein Verfahren zur Herstellung von Verbundglaslaminaten aus einem Schichtkörper enthaltend eine weichmacherhaltige und eine weichmacherarme Polyvinylacetalfolie mittels Fixierung der weichmacherarmen auf der weichmacherhaltigen Polyvinylacetalfolie.

Zur Herstellung von Verbundglasscheiben mit elektrisch leitfähigen Strukturen wie etwa Heizdrähten oder Antennen Eigenschaften sind Verfahren üblich, bei welchen Metallfilamente entweder zunächst auf die Oberfläche einer normalen PVB-Folie aufgeschmolzen bzw. in diese eingenäht werden oder die elektrisch leitfähigen Strukturen auf einer der im Laminat nach innen orientierten Glasoberflächen durch Siebdruck und anschließendes Einbrennen aufgebracht werden. In beiden Fällen besteht das Risiko von wirtschaftlichen Verlusten, falls beim Applizieren auf die normale PVB-Folie oder beim Aufbringen auf eine vorbereitete Glasscheibe Fehler auftreten. Im ersten Fall kann die PVB-Folie, im zweiten Fall das Glas nicht mehr zur Lamination verwendet werden.

Das direkte bedrucken von PET-Folien mit elektrisch leitfähigen Strukturen ist dagegen teilweise etabliert und beispielsweise können nahezu unsichtbare Heizelemente, Sensorfelder etc. darauf erzeugt werden. Nachteilig bei einer beabsichtigten Integration solcher mit elektrisch leitfähigen Strukturen bedruckter PET-Folien in Verbundglaslaminate ist dabei jedoch, dass immer mindestens 3 Folienlagen (1 x funktionalisiertes PET, 2 x PVB-Folie) verwendet werden müssen, da PET mit der funktionalisierten Seite bzw. der Rückseite nicht direkt auf einer Glasoberfläche angeschmolzen werden kann.

Ein anderer Nachteil ist die erhöhte Komplexität der Folienkonfektionierung, die durch Kombination des Merkmales "mit elektrisch leitfähigen Strukturen" mit weiteren Funktionsmerkmalen wie "akustischer Dämpfung", "Bandfilter", "keilförmiges Dickenprofil", "Farbton" zu einer Verkomplizierung der Folienvorbereitung beim Verarbeiter führt.

Ähnliche Einschränkungen sind selbstverständlich auch bei Verwendung von andersartig funktionalisierten PET-Folien gegeben. Zum Beispiel kann es wünschenswert sein, dekorativ oder mit einem Logo bedruckte Folien in ein Verbdundsicherheitsglas einzubetten.

### Aufgabe

Bei der Herstellung von Verbundglaslaminaten aus einer weichmacherhaltigen und einer weichmacherarmen Polyvinylacetalfolie ist durch elektrostatische Aufladung, Luftzug oder mechanisches Verschieben eine exakte Positionierung der Folien schwierig. Weiterhin kann es wünschenswert sein, dünne IR-abschirmende Schichten in Form von metallischen oder auf nanoskaligen Halbleiterpartikeln basierenden Lagen zusätzlich zu einer oder mehrerer verwendeten PVB-Folien in ein Verbundglaslaminat einzubringen.

Überraschenderweise wurde gefunden, dass Folien auf Basis von weichmacherarmem bzw. -freien Polyvinylacetal mit einer Flüssigkeit auf einer weichmacherhaltigen Folie oder auf einer Glasscheibe durch Adhäsion fixiert und hierdurch genau positioniert werden können.

Die Grenzflächenspannung zwischen der Flüssigkeit, der weichmacherarmem bzw. -freien Folie und der weichmacherhaltigen Folie bzw. der Glasscheibe ist für eine Fixierung der Folie ausreichend groß.

Gegenstand der Erfindung ist daher ein Verfahren zur Herstellung eines Schichtkörpers bestehend aus mindestens einer Folie A enthaltend ein Polyvinylacetal PA und maximal 16 Gew% Weichmacher WA und mindestens einer Folie B enthaltend ein Polyvinylacetal PB und mindestens 16 Gew% Weichmacher WB zwischen zwei Glasscheiben, wobei mindestens eine Folie A mittels einer Flüssigkeit auf mindestens eine Folie B oder mindestens einer der Glasscheiben adhäriert wird.

Die Adhäsion von Folien A auf Folien B oder auf Gasscheiben bewirkt eine Fixierung der Folie A, sodass diese sich in der folgenden Bearbeitung oder Vervollständigung des Schichtkörpers nicht mehr verschiebt.

Im erfindungsgemäßen Verfahren kann Folie A durch Applikation der Flüssigkeit auf die Folie A und/oder auf die Folie B und/oder auf eine der Gasscheiben vor dem Zusammengelegen zu einem Schichtkörper mit der Flüssigkeit benetzt werden. Dies ist z.B. in den folgenden Varianten möglich:
- Folie A wird ganz oder teilweise mit einer Flüssigkeit benetzt und auf der Folie B fixiert und beide Folien werden zwischen zwei Glasscheiben zu einem Schichtkörper zusammengelegt
- Folie B wird ganz oder teilweise mit einer Flüssigkeit benetzt und Folie A auf dieser fixiert und beide Folien werden zwischen zwei Glasscheiben zu einem Schichtkörper zusammengelegt
- Folie A wird ganz oder teilweise mit einer Flüssigkeit benetzt und auf einer der Glasscheiben fixiert und mit der Folie B und der zweiten Glasscheibe zu einem Schichtkörper zusammengelegt
- Eine Glasoberfläche bzw. Glasscheibe wird ganz oder teilweise mit einer Flüssigkeit benetzt und Folie A auf dieser fixiert und mit der Folie B und der zweiten Glasscheibe zu einem Schichtkörper zusammengelegt

In einem weiteren Verfahrensschritt kann der so erhaltene Schichtkörper zu einem Verbundglaslaminat verpresst werden.

Das erfindungsgemäße Benetzung der Folie A mit der Flüssigkeit kann bei dem Zusammengelegen der Folien zu einem Schichtkörper und/oder auf eine der Gasscheiben vor dem Zusammengelegen zu einem Schichtkörper erfolgen, indem die Flüssigkeit auf die Folie A und/oder auf die Folie B appliziert wird. Die Flüssigkeit kann durch übliche Methoden wie Sprayen, Tropfenbildung oder Aufdrucken aufgebracht werden.

Als Flüssigkeit kann eine organische Flüssigkeit, bevorzugt mit einem Siedepunkt von mehr als 120°C verwendet werden, insbesondere die Weichmacher WA und/oder Weichmacher WB der Folien A und/oder B. Weiterhin können Glycerin, Butyldiglycol oder Dimethylformamid eingesetzt werden. Die Verwendung von Wasser ist grundsätzlich ebenfalls möglich, birgt aber die Gefahr von Trübungen in den Folien.

Die Folien A weisen optional auf einer oder beiden Oberfläche elektrisch leitfähige Strukturen auf. Unter elektrisch leitfähigen Strukturen werden dabei unter anderem beliebig breite oder schmale Leiterbahnen, Mikrodrähte, Flächen, Netze, Punkte, Schichten sowie Kombinationen daraus verstanden.

Bevorzugt enthalten die elektrisch leitfähigen Strukturen Metalle wie Silber, Kupfer, Gold, Indium, Zink, Eisen, Aluminium. Alternativ bzw. in Kombination dazu können aber auch Halbleitermaterialien in oder auf der Folie A angeordnet sein. Weiterhin können Leitfähige Materialien auf Kohlenstoffbasis wie etwa Graphit, CNT (Carbon nano tubes) oder Graphen enthalten sein.

Alternativ oder zusätzlich zu elektrisch leitfähigen Strukturen können die Folien A auf einer oder beiden Oberfläche zumindest teilweise Wärmestrahlung abschirmende Schichten oder Nanopartikel aufweisen. Die Wärmestrahlung abschirmenden Schichten können in Form von metallischen Schichten oder nanoskalige Halbleiterpartikel enthaltender Schichten vorliegen.

In einer weiteren Ausführungsform der Erfindung können die Folien A zumindest teilweise nicht transparent und/oder gefärbt und/oder opak sein. Die nicht transparenten und/oder gefärbten und/oder opaken Teilflächen der Folien können durch Tintenstrahldruck, Siebdruck, Auflaminieren erhalten werden.

Weiterhin kann die Folie A bedruckt werden, z.B. mit dekorativen Elementen wie Bildern, Logos oder Zeichnungen oder mit informativen Elementen wie Schriftzügen, Werbung, Unternehmenshinweisen, oder Produktinformationen. Dies kann mit den bekannten Druckverfahren und Tinten bzw. Druckfarben erfolgen.

Alle Oberflächenbehandlungen (elektrisch leitfähige Strukturen, Wärmestrahlung abschirmende Schichten oder nicht-transparente, gefärbte oder opake Flächen) der Folie A können durch unterschiedliche Varianten von Druckverfahren wie zum Beispiel Sieb-, Flexo- oder Gravurdruck, Bedampfen, Besputtern, Elektroabscheidung auf der Oberfläche der Folie A erzeugt werden. Bei Druckverfahren kommen entsprechende Tinten zum Einsatz, welche unter Umständen vor der Lamination in der Regel noch getrocknet bzw. thermisch oder photonisch ausgehärtet werden können. Die elektrisch leitfähigen Strukturen können auch in Ihrer endgültigen Form erst durch die Verwendung von Lasern oder anderen Bearbeitungsmitteln (gravieren, ätzen) aus einer zunächst gröberen Struktur auf der Folie A herausgearbeitet werden.

Bei Verwendung von Druckverfahren ("printed electronics") können die verwendeten Tinten bzw. Druckfarben Leitfähigkeitspartikel enthalten. Dies können Partikel aus Metallen wie aus Gold, Silber, Kupfer, Zink, Eisen oder Aluminium sowie mit Metallen beschichtete Materialien wie versilberte Glasfasern, Glaskügelchen sowie Leitfähigkeitsruß, Carbon-Nanotubes, Graphit oder Graphen sein. Weiterhin Partikel aus Halbleitern wie leitfähige Metalloxide, z.B. Indium-dotiertes Zinnoxid, dotierte Zinkoxide, Antimon-dotiertes Zinnoxid.

Die Oberflächenbehandlungen können zur elektromagnetischen Abschirmung von Frequenzfeldern, zur Erzeugung elektrischer Stromkreise wie Leiterbahnen oder Sende- und/oder Empfangsantennen führen. Dadurch können beispielsweise Heizelemente oder Antennen in den Glasverbund eingebracht werden. Antennen können beispielsweise im Automobilsektor zum Empfang von Radiowellen oder in der Car-to-Car-Kommunikation Verwendung finden.

Die elektrisch leitfähigen Strukturen der Folien A können auch als Berührungssensor ausgeführt werden was die Herstellung von interaktiven Verbundglasscheiben ermöglicht. So können z.B. Informationseingaben auf der Verbundglasscheibe (z.B. einer Windschutzscheibe oder Seitenverglasung eines KFZ oder der Glasschiebe einer Türe) zur Zugangskontrolle genutzt werden.

Bei Mehrschichtaufbauten elektronischer Elemente, d.h. leitfähiger und dielektrischer Strukturen lassen sich darüber hinaus ganze elektronische Schaltkreise oder Bauteile aufbringen. Hierunter fallen u.a. Transistoren, Widerstände, Chips, Sensoren, Displays, Leuchtdioden (z.B. OLEDs) und/oder Smart-Labels.

Die elektrisch leitfähigen Strukturen können im Fall von Filamenten so klein sein, dass sie mit bloßem Auge nur noch schlecht erkannt werden können. Dies bei Breiten von 1 bis 30 µm, bevorzugt 1 bis 20 µm und am meisten bevorzugt 1 bis 15 µm der Fall. Insbesondere bei flächigen Heizfeldern beträgt die Breite der Filamente weniger als 25 µm. Heizfelder können auch nur lokal, z.B. vor einem optischen Sensorsystem an einer Oberseite einer Windschutzscheibe eingebracht werden. Die erfindungsgemäß eingesetzten elektrisch leitfähigen Strukturen weisen bevorzugt Dicken im Bereich von 0.1 - 50 µm, besonders bevorzugt im Bereich von 0,5 - 20 µm und bevorzugt im Bereich von 1 - 10 µm auf.

In einer weiteren Variante der Erfindung kann die Folie A eine kleinere Fläche als Folie B aufweisen. Dies führt auf der Seite der Folie A dazu, das die Folie B in einem Teilbereich in direktem Kontakt mit einer Glasscheibe ist. Folie A kann auch mindestens eine Aussparung aufweist, sodass die Folie B durch diese Aussparung in direktem Kontakt mit der an Folie A anliegenden Glasscheibe ist. Hier ist der Vorteil, dass Folie A ggf. mit einer der genannten Oberflächenbehandlungen flexibel an beliebigen Stellen einer Automobilverglasung positioniert werden kann, ohne die gesamte Scheibe auszufüllen.

Im Folgenden wird mit dem "Ausgangszustand" der Zustand der Folien A und B vor dem Laminieren, d.h. im noch getrennten Zustand verstanden.

Die Folien A und B können im Ausgangszustand vor dem Laminieren der Schichten als auch in dem im Verbundglaslaminat befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Verbundglas den gleichen Weichmacher WA und WB auf. In einer bevorzugten Variante enthält die Folie A in ihrem Ausgangszustand aber keinen Weichmacher und nach dem Laminieren den Weichmacher WB.

Erfindungsgemäß verwendete weichmacherhaltige Folien B enthalten im Ausgangszustand vor dem Laminieren der Schichten mindestens 16 Gew%, wie 16.1 - 36.0 Gew.%, bevorzugt 22.0 - 32.0 Gew.% und insbesondere 26.0 - 30.0 Gew.% Weichmacher.

Erfindungsgemäß verwendete Folien A können im Ausgangszustand vor dem Laminieren der Schichten weniger als 16 Gew.% (wie 15.9 Gew.%), weniger als 12 Gew.-%, weniger als 8 Gew.-%, weniger als 6 Gew.-%, weniger als 4 Gew.-%, weniger als 3 Gew.-%, weniger als 2 Gew.-%, weniger als 1 Gew-% oder gar keinen Weichmacher (0.0 Gew.%) enthalten. Bevorzugt enthalten die weichmacherarmen Folien A 0.0 - 8 Gew.-% Weichmacher.

Im erfindungsgemäßen Verfahren weist die Folie A im Ausgangszustand vor dem Laminieren der Schichten eine Dicke von nicht mehr als 20%, bevorzugt 15% und bevorzugt nicht mehr als 10% der Dicke der Folie bzw. der Folien B auf. Die Dicke der Folie A schließt die elektrisch leitfähige Struktur mit ein.

Die Dicke einer Folie A im Ausgangszustand vor dem Laminieren der Schichten beträgt 10 - 150 µm, bevorzugt 20 - 120 µm, bevorzugt 30 - 100 µm, bevorzugt 40 - 80 µm und am meisten bevorzugt 50 - 70 µm. Im Verbundglas nimmt die Dicke der Folie durch Übergang von Weichmacher aus Folie B zu.

Die Folie A wird separat von Folie B hergestellt (z.B. extrudiert und weist entweder gar keinen Weichmacher oder einen so geringen Weichmacheranteil auf, dass sie bei der Herstellung und Weiterverarbeitung unter mechanischer Beanspruchung sich weder zu stark dehnt noch zu klebrig ist.

Die Dicke einer Folie B beträgt im Ausgangszustand 450 - 2500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern.

Die Folie A kann hierbei mit einer Oberflächenbehandelten Seite auf eine Glasoberfläche des erfindungsgemäßen Schichtkörpers aufgebracht werden. Es ist auch möglich, auf beide Glasoberflächen jeweils eine Folie A aufzubringen, so dass ein Schichtkörper mit einer Schichtabfolge Folie A/ Folie B/ Folie A bzw. ein Verbundglaslaminat mit einer Schichtabfolge Glass/Folie A/ Folie B/ Folie A / Glass erhalten wird.

Hierbei kann eine Oberflächenbehandlung der Folien A gleich oder unterschiedlich sein. Beispielsweise kann dabei eine der Folien A die elektrisch leitfähigen Struktur aufweisen und die zweite Folie A wärmeabsorbierende Schichten oder andere Schichten mit optischen Funktionen (transparenz) aufweisen.

Bei Automobilverglasungen ist es aus ästhetischen und Dauerhaftigkeitsgründen nicht bevorzugt, die Kanten der Verbundglaslaminate mit Dichtstoffen zu versiegeln. Dies begünstigt die Anfälligkeit solcher Verglasungen gegenüber Ausbildung von Kantendefekten wie etwa Ablösungen der Schichten untereinander (Delaminationen) oder Korrosion bzw. chemischer Veränderung einer bis zur Kante des Laminates reichenden elektrisch leitfähigen Struktur.

Im erfindungsgemäßen Verfahren kann die weichmacherarme Folie A so zugeschnitten und positioniert werden, dass sie im Schichtkörper bzw. Verbundglaslaminat nicht überall bis zum Rand des Laminates reicht. Insbesondere kann die Folie A im Randbereich um mindestens 1 mm kleiner sein als mindestens eine Glasscheibe sodass die Folie B in diesem Randbereich in direktem Kontakt mit mindestens einer Glasscheibe ist.

Weiterhin kann die dünne, im Ausgangszustand weichmacherarme oder weichmacherfreie Folie A vor dem Einlegen in den Glas / Foliensandwich perforiert werden, so dass sie Aussparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit mindestens einer Glasscheibe ist. Nach dem Verkleben zum fertigen Verbundglas ist die Folie B mit im Ausgangszustand höherem Weichmachergehalt an diesen Stellen mit den Glasscheiben ohne Unterbrechung verklebt. Insbesondere können so Aussparungen an Stellen des Verbundglases erhalten werden, hinter welchen Optik-, Antennenelemente ansonsten durch eine elektrisch leitfähige Struktur in ihrer Funktion beeinträchtigt werden würden.

Die erfindungsgemäß eingesetzten Folien A und B enthalten Polyvinylacetale, welche durch Acetalisierung von Polyvinylalkohol oder Ethylen-Vinylalkohol-Copolymer hergestellt werden.

Die Folien können Polyvinylacetale mit jeweils unterschiedlichem Polyvinyl-alkohol-gehalt, Acetalisierungsgrad, Restacetatgehalt, Ethylenanteil, Molekulargewicht bzw. unterschiedlichen Kettenlängen des Aldehydes der Acetalgruppen enthalten.

Insbesondere können die zur Herstellung der Polyvinylacetale eingesetzten Aldehyde oder Ketoverbindungen linear oder verzweigt (d.h. vom "n" oder "iso"-Typs) mit 2 bis 10 Kohlenstoffatomen sein, was zu entsprechenden linearen oder verzweigten Acetalgruppen führt. Die Polyvinylacetale werden entsprechend als "Polyvinyl(iso)acetale" oder "Polyvinyl(n)-acetale" bezeichnet.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Die zur Herstellung der Polyvinylacetale in den Folien A oder B verwendeten Polyvinylalkohole oder Ethylen-Vinylalkohol-Copolymere können jeweils gleich oder unterschiedlich, rein oder eine Mischung von Polyvinylalkoholen oder Ethylen-Vinylalkohol-Copolymere mit unterschiedlichem Polymerisationsgrad oder Hydrolysegrad sein.

Der Polyvinylacetatgehalt der Polyvinylacetale in den Folien A oder B kann durch Verwendung eines zu einem entsprechenden Grad verseiften Polyvinylalkohols oder Ethylen-Vinylalkohol-Copolymer eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Schicht ändern. Es ist auch möglich, die Acetalisierung der Polyvinylalkohole oder Ethylen-Vinylalkohol-Copolymere mit einem Gemisch aus mehreren Aldehyden oder Ketoverbindungen durchzuführen.

Bevorzugt enthalten die Folien A oder B Polyvinylacetale mit einem Anteil an Polyvinylacetatgruppen bezogen auf die Schichten jeweils gleich oder unterschiedlich 0.1 bis 20 Mol%, bevorzugt 0,5 bis 3 Mol% oder 5 bis 8 Mol%.

Der Polyvinylalkoholgehalt der verwendeten Polyvinylacetale PA der im Ausgangszustand weichmacherärmeren Folie A kann zwischen 6 - 26 Gew.-%, 8 - 24 Gew.-%, 10 - 22 Gew.-%, 12 - 21 Gew.-%, 14 - 20 Gew.-%, 16 - 19 Gew.-% und bevorzugt zwischen 16 und 21 Gew.-% oder 10 - 16 Gew.-% betragen.

Der Polyvinylalkoholgehalt der verwendeten Polyvinylacetale PB der im Ausgangszustand weichmacherreicheren Folie B kann zwischen 14 - 26 Gew.-%, 16 - 24 Gew.-%, 17 - 23 Gew.-% und bevorzugt zwischen 18 und 21 Gew.-% betragen.

Die Folien A oder B enthalten bevorzugt unvernetztes Polyvinylacetal. Der Einsatz von vernetzten Polyvinylacetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Die erfindungsgemäß eingesetzten Folien A und/oder B können als Weichmacher eine oder mehrere Verbindungen ausgewählt aus folgenden Gruppen enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyl-adipaten, Diisononyladipat, Heptylnonyl-adipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Glycerin, Di-, Tri- oder Tetraglykolen mit linearen oder verzweigten ali-phatischen oder cycloaliphatischen Carbonsäuren; Als Beispiele für letztere Gruppe können Diethylenglykol-bis-(2-ethyl-hexanoat), Triethylenglykol-bis-(2-ethyl-hexanoat), Tri-ethylen-glykol-bis-(2-ethylbu-ta-no-at), Tetra-ethylen-glykol-bis-n-heptanoat, Triethylengly-kol-bis-n-heptanoat, Triethylenglykol-bis-n-hexanoat, Tetraethylen-glykol-dimethyl-ether und/oder Dipropylenglykolbenzoat dienen
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Besonders bevorzugt enthalten die Folien A in den Varianten, bei welchen in Folie A im Ausganszustand ein Weichmacher WA vorhanden ist sowie Folien B 1,2-Cyclohexandicarbonsäurediisononylester (DINCH) oder Triethylenglykol-bis-2-ethylhexanoat (3GO bzw. 3G8) als Weichmacher.

Zusätzlich können die Folien A und B weitere Zusätze enthalten wie Restmengen an Wasser, UV-Absorber, Antioxidantien, Haftungsregulatoren, optische Aufheller bzw. fluoreszierende Zusätze, Stabilisatoren, Farbmittel, Verarbeitungshilfsmittel, organische oder anorganische Nanopartikel, pyrogene Kieselsäure und/oder oberflächen-aktive Stoffe enthalten. Insbesondere kann Folie B als Haftungsregulatoren 0,001 bis 0,1 Gew.% Alkali- und/oder Erdalkalisalze von Carboxylsäuren aufweisen.

Zur Unterdrückung von Korrosionseffekten der über Folie A in das Verbundglas eingebrachten elektrisch leitfähigen Strukturen, insbesondere bei Verwendung von metallischen Leitermaterialien wie z.B. Silber, kann es hilfreich sein, ein Korrosionsschutzmittel im fertigen Laminat bereitzustellen. Bevorzugt kann das Korrosionsschutzmittel vor Lamination in Folie B enthalten sein und während und nach der Verklebung mit Folie A durch Diffusion auch in die dünnere Folie A bzw. in den Bereich von deren Beschichtung übergehen. Alternativ ist das Korrosionsschutzmittel vor Lamination bereits in Folie A enthalten. Bevorzugt werden Korrosionsschutzmittel in Anteilen von 0.005 - 5 Gew.-% in Folie B oder / und A eingesetzt. Bevorzugt werden als Korrosionsschutzmittel unsubstituierte oder substituierte Benzotriazole verwendet.

Zur Vermeidung von Korrosion an den leitfähigen Strukturen ist weiterhin bevorzugt, das Folie A weniger als 150 ppm Chloridionen und/oder Nitrationen und/oder Sulfationen aufweist.

So kann der Chloridgehalt der Folie A geringer als 150 ppm, bevorzugt geringer als 100 ppm und insbesondere geringer als 50 ppm sein. Im Idealfall beträgt der Chloridgehalt der Folie A weniger als 10 ppm oder sogar 0 ppm.

Optional kann der Nitratgehalt der Folie A Folie weniger als 150 ppm betragen, bevorzugt weniger als 100 ppm und insbesondere weniger als 50 ppm betragen. Im Idealfall beträgt der Nitratgehalt der Folie A weniger als 10 ppm oder sogar 0 ppm.

Wiederum optional kann der Sulfatgehalt der Folie A Folie weniger als 150 ppm betragen, bevorzugt weniger als 100 ppm und insbesondere weniger als 50 ppm betragen. Im Idealfall beträgt der Sulfatgehalt der Folie A weniger als 10 ppm oder sogar 0 ppm.

Zusätzlich kann Folie A mehr als 0 ppm Magnesiumionen aufweisen. Bevorzugt beträgt der Magnesiumgehalt mehr als 5 ppm besonders bevorzugt 10 ppm, insbesondere 5 - 20 ppm

Weiterer Gegenstand der vorliegenden Erfindung ist ein Verfahren zur Herstellung von Verbundverglasungen durch verpressen (Laminieren) des Schichtkörpers unter erhöhtem oder vermindertem Druck und erhöhter Temperatur.

Zur Laminierung des Schichtkörpers können die dem Fachmann geläufigen Verfahren mit und ohne vorhergehender Herstellung eines Vorverbundes eingesetzt werden.

Sogenannte Autoklavenprozesse werden bei einem erhöhten Druck von ca. 10 bis 15 bar und Temperaturen von 100 bis 145 °C über ca. 2 Stunden durchgeführt. Vakuumsack- oder Vakuumring-verfahren z.B. gemäß EP 1 235 683 B1 arbeiten bei ca. 200 mbar und 130 bis 145 °C

Es sind auch sog. Vakuumlaminatoren einsetzbar. Diese bestehen aus einer beheizbaren und evakuierbaren Kammer, in denen Verbund-verglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Das Verfahren kann in vielen Varianten durchgeführt werden. Beispielsweise wird Folie A einfach von einer Rolle entsprechender Breite entnommen wogegen Folie B vorher auf Maß des herzustellenden Verbundglases zugeschnitten wurde. Dies ist insbesondere im Fall von Windschutzscheiben und anderen Automobilverglasungsteilen von Vorteil. In diesem Fall ist es besonders vorteilhaft, die dickere Folie B vor Zuschnitt zusätzlich noch zu Recken. Dies ermöglicht einen sparsameren Folieneinsatz bzw. für den Fall, dass Folie B ein Farbkeil aufweist, das Anpassen von dessen Krümmung an den oberen Scheibenrand.

Im Automobilbereich, insbesondere zur Herstellung von Windschutzscheiben werden häufig Folien verwendet, die im oberen Bereich ein sog. Farbband aufweisen. Hierzu kann entweder der obere Teil der Folien A und B mit einer entsprechend eingefärbten Polymerschmelze coextrudiert werden oder es kann in einem Mehrschichtsystem eine der Folien A und B in Teilbereichen eine unterschiedliche Färbung aufweisen. In der vorliegenden Erfindung ist dies durch vollständiges oder teilweises Einfärben zumindest einer der Folien A und B realisierbar.

Folien B können daher einen Farbkeil aufweisen, welcher insbesondere bereits in einem vorgelagerten Prozessschritt der Geometrie einer Windsschutzscheibe angepasst wurde.

Es auch möglich das die Folien B ein keilförmige Dickenprofil besitzen. Hierdurch erhält das erfindungsgemäße Verbundglaslaminat selbst bei planparallelem Dickenprofil der Folie A ein keilförmiges Dickenprofil und kann in KFZ-Windschutzscheiben für HUD Displays eingesetzt werden.

Im einfachsten Fall ist die Folie B eine handelsüblichen PVB-Folie mit oder ohne Farbband und mit oder ohne keilförmigen Dickenprofil. Ebenfalls können Folien B mit darin zum IR-Schutz dispergierten Nanopartikeln als auch gefärbte Folien verwendet werden. Natürlich kann eine Folie B auch eine Folie mit Akustikfunktion sein, so dass durch Kombination mit einer Folie A verbesserte Schalldämmeigenschaften erhalten werden. Natürlich kann eine Folie B bereits auch mehrere der genannten Funktionen in sich vereinen.

Die Herstellung der dünnen Folien A erfolgt in der Regel durch Extrusion unter Verwendung einer Cast-Film Linie oder als Blasfolie. Hierbei kann eine Oberflächenrauhigkeit durch kontrollierten Fließbruch oder beim Cast-Film Verfahren zusätzlich durch Verwendung einer strukturierten Chillroll erfolgen.

Zusätzlich kann einer bereits hergestellten Folie durch einen Prägevorgang zwischen mindestens einem Walzenpaar eine regelmäßige, nicht stochastische Rauhigkeit aufgeprägt werden. Bevorzugt weisen erfindungsgemäß verwendete Folien eine einseitige Oberflächenstruktur mit einer Rauhigkeit Rz von 0 bis 25 µm, bevorzugt Rz von 1 bis 20 µm, besonders bevorzugt Rz von 3 bis 15 µm und insbesondere Rz von 4 bis 12 µm auf. Besonders bevorzugt ist, wenn die mit der Glasscheibe in Kontakt kommende Seite der Folie A eine Oberflächenrauhigkeit Rz von nicht mehr als 20% ihrer Dicke aufweist. Die mit der elektrisch leitfähigen Struktur versehene Oberfläche weist vor Aufbringen der Beschichtung bevorzugt eine besonders geringe Oberflächenrauhigkeit auf. Insbesondere beträgt hier der Rauhigkeitsparameter Ra weniger als 3 µm und Rz weniger als 5 µm.

## Patentansprüche

1. Verfahren zur Herstellung eines Schichtkörpers bestehend aus mindestens einer Folie A enthaltend ein Polyvinylacetal PA und maximal 16 Gew% Weichmacher WA und mindestens einer Folie B enthaltend ein Polyvinylacetal PB und mindestens 16 Gew% Weichmacher WB zwischen zwei Glasscheiben, **dadurch gekennzeichnet, dass** mindestens eine Folie A mittels einer Flüssigkeit auf mindestens eine Folie B oder mindestens einer der Glasscheiben adhäriert wird.

2. Verfahren nach Anspruch 1, **dadurch gekennzeichnet, dass** die Folie A durch Applikation der Flüssigkeit auf die Folie A und/oder auf die Folie B und/oder auf eine der Gasscheiben vor dem Zusammengelegen zu einem Schichtkörper mit der Flüssigkeit benetzt wird.

3. Verfahren nach Anspruch 1 oder 2, **dadurch gekennzeichnet, dass** als Flüssigkeit eine organische Flüssigkeit mit einem Siedepunkt von mehr als 120°C verwendet wird.

4. Verfahren nach einem der Ansprüche 1 bis 3, **dadurch gekennzeichnet, dass** als Flüssigkeit Weichmacher WA und/oder Weichmacher WB verwendet wird.

5. Verfahren nach einem der Ansprüche 1 bis 4, **dadurch gekennzeichnet, dass** die Folie A und/oder eine Glasoberfläche mit der Flüssigkeit durch Sprayen, Bestreichen, Platzieren von Tropfen oder Aufdrucken benetzt wird.

6. Verfahren nach einem der Ansprüche 1 bis 5 **dadurch gekennzeichnet, dass** die Folie A ein Polyvinylacetal PA mit einem Anteil an Vinylalkoholgruppen von 6 bis 26 Gew.% und die Folie B ein Polyvinylacetal PB mit einem Anteil an Vinylalkoholgruppen von 14 bis 26 Gew.% aufweist.

7. Verfahren nach einem der Ansprüche 1 bis 6 **dadurch gekennzeichnet, dass** die Folie A eine kleinere Fläche als Folie B aufweist.

8. Verfahren nach einem der Ansprüche 1 bis 7 **dadurch gekennzeichnet, dass** die Folie A mindestens eine Aussparung aufweist, sodass die Folie B durch diese Aussparung in direktem Kontakt mit der an Folie A anliegenden Glasscheibe ist.

9. Verfahren nach einem der Ansprüche 1 bis 8, **dadurch gekennzeichnet, dass** die Folie A elektrisch leitfähige Strukturen aufweist.

10. Verfahren nach einem der Ansprüche 1 bis 9 **dadurch gekennzeichnet, dass** die Folie A zumindest teilweise nicht transparent und/oder gefärbt und/oder opak ist.

11. Verfahren nach Anspruch 9 **dadurch gekennzeichnet, dass** die Folie A bedruckt ist.

12. Verfahren nach einem der Ansprüche 1 bis 11 **dadurch gekennzeichnet, dass** die Folie A zumindest teilweise Wärmestrahlung abschirmende Schichten oder Nanopartikel aufweist.

13. Verfahren nach einem der Ansprüche 1 bis 12 **dadurch gekennzeichnet, dass** die Folie B akustisch dämpfend ist.

14. Verfahren nach einem der Ansprüche 1 bis 13 **dadurch gekennzeichnet, dass** die Folie B einen farbigen Teilbereich aufweist.

15. Verfahren nach einem der Ansprüche 1 bis 14 **dadurch gekennzeichnet, dass** die Folie B ein keilförmiges Dickenprofil aufweist.

## Claims

1. A method for producing a layered body consisting of at least one film A containing a polyvinyl acetal PA and at most 16 % by weight of plasticiser WA and at least one film B containing a polyvinyl acetal PB and at least 16 % by weight plasticiser WB between two glass sheets, **characterised in that** at least one film A is adhered to at least one film B or to at least one of the glass sheets by means of a liquid.

2. The method according to claim 1, **characterised in that** the film A is wetted with the liquid by applying the liquid to the film A and/or to the film B and/or to one of the glass sheets, prior to combining the layers to form a layered body.

3. The method according to claim 1 or 2, **characterised in that** the liquid used is an organic liquid with a boiling point of more than 120°C.

4. The method according to any one of claims 1 to 3, **characterised in that** the liquid used is plasticiser WA and/or plasticiser WB.

5. The method according to any one of claims 1 to 4, **characterised in that** the film A and/or a glass surface is/are wetted with the liquid by spraying, painting, placement of drops or printing.

6. The method according to any one of claims 1 to 5, **characterised in that** the film A comprises a polyvinyl acetal PA with a proportion of vinyl alcohol groups from 6 to 26 % by weight and the film B comprises a polyvinyl acetal PB with a proportion of vinyl alcohol groups from 14 to 26 % by weight.

7. The method according to any one of claims 1 to 6, **characterised in that** the film A has a smaller surface area than the film B.

8. The method according to any one of claims 1 to 7, **characterised in that** the film A has at least one opening, such that by means of this opening the film B is in direct contact with the glass sheet bearing against film A.

9. The method according to any one of claims 1 to 8, **characterised in that** the film A has electrically conductive structures.

10. The method according to any one of claims 1 to 9, **characterised in that** the film A is at least partly non-transparent and/or coloured and/or opaque.

11. The method according to claim 9, **characterised in that** the film A is printed.

12. The method according to any one of claims 1 to 11, **characterised in that** the film A at least in part comprises heat radiation-shielding layers or nanoparticles.

13. The method according to any one of claims 1 to 12, **characterised in that** the film B is acoustically damping.

14. The method according to any one of claims 1 to 13, **characterised in that** the film B has a coloured area.

15. The method according to any one of claims 1 to 14, **characterised in that** the film B has a wedge-shaped thickness profile.

## Revendications

1. Procédé de fabrication d'un corps stratifié qui est constitué d'au moins une feuille A contenant un acétal de polyvinyle PA et au maximum 16 % en poids de plastifiant WA et d'au moins une feuille B contenant un acétal de polyvinyle PB et au moins 16 % en poids de plastifiant WB entre deux vitres, **caractérisé en ce que** l'on faire adhérer, à l'aide d'un liquide, au moins une feuille A sur au moins une feuille B ou au moins une desdites vitres

2. Procédé selon la revendication 1, **caractérisé en ce que**, préalablement à l'assemblage visant à former un corps stratifié, la feuille A est mouillée avec ledit liquide en appliquant le liquide sur la feuille A et/ou sur la feuille B et/ou sur une des vitres.

3. Procédé selon la revendication 1 ou 2, **caractérisé en ce que** l'on utilise, en tant que liquide, un liquide organique ayant un point d'ébullition supérieure à 120 °C.

4. Procédé selon l'une des revendications 1 à 3, **caractérisé en ce que** l'on utilise, en tant que liquide, du plastifiant WA et/ou du plastifiant WB.

5. Procédé selon l'une des revendications 1 à 4, **caractérisé en ce que** le mouillage de la feuille A et/ou d'une surface de vitre avec ledit liquide est réalisé par nébulisation, étalage, dépôt de gouttes ou par impression.

6. Procédé selon l'une des revendications 1 à 5, **caractérisé en ce que** la feuille A comporte un acétal de polyvinyle PA ayant une proportion de groupes d'alcool vinylique comprise entre 6 et 26 % et la feuille B comporte un acétal de polyvinyle PB ayant une proportion de groupes d'alcool vinylique comprise entre 14 et 26 % en poids.

7. Procédé selon l'une des revendications 1 à 6, **caractérisé en ce que** la feuille A présente une surface plus petite que la feuille B.

8. Procédé selon l'une des revendications 1 à 7, **caractérisé en ce que** la feuille A présente au moins un évidement, de manière à ce qu'à travers ledit évidement, la feuille B soit en contact direct avec la vitre adjacente à la feuille A.

9. Procédé selon l'une des revendications 1 à 8, **caractérisé en ce que** la feuille A présente des structures conductrices d'électricité.

10. Procédé selon l'une des revendications 1 à 9, **caractérisé en ce qu'**au moins sur certaines parties, la feuille A présente un caractère non-transparent et/ou coloré et/ou opaque.

11. Procédé selon la revendication 9, **caractérisé en ce que** la feuille A présente un élément appliqué par impression.

12. Procédé selon l'une des revendications 1 à 11, **caractérisé en ce qu'**au moins sur certaines parties, la feuille A comporte des couches ou nanoparticules ayant un effet protecteur contre les rayonnements thermiques.

13. Procédé selon l'une des revendications 1 à 12, **caractérisé en ce que** la feuille B a des propriétés d'isolation phonique.

14. Procédé selon l'une des revendications 1 à 13, **caractérisé en ce que** ladite feuille B comporte une zone partielle colorée.

15. Procédé selon l'une des revendications 1 à 14, **caractérisé en ce que** la feuille B présente un profil d'épaisseur en forme de cale.
